Europäisches Patentamt

European Patent Office

Office européen des brevets

(11) Veröffentlichungsnummer: **0 421 118 A1**

## (12) EUROPÄISCHE PATENTANMELDUNG

(21) Anmeldenummer: 90116406.1

(22) Anmeldetag: 27.08.90

(51) Int. Cl.⁵: **G02B 6/42, G02B 7/02**

(30) Priorität: **12.09.89 DE 3930433**

(43) Veröffentlichungstag der Anmeldung:
**10.04.91 Patentblatt 91/15**

(84) Benannte Vertragsstaaten:
**DE FR GB**

(71) Anmelder: **Siemens Aktiengesellschaft**
**Wittelsbacherplatz 2**
**W-8000 München 2(DE)**

(72) Erfinder: **Mayerhofer, Franz**
**Primelstrasse 34**
**W-8039 Puchheim(DE)**
Erfinder: **Karstensen, Holger, Dr.**
**Hubertusstrasse 2**
**W-8011 Hohenbrunn(DE)**
Erfinder: **Dietrich, Ralf**
**Agilolfingerplatz 5**
**W-8000 München 90(DE)**
Erfinder: **Späth, Werner**
**Burgstallerstrasse 10**
**W-8150 Holzkirchen(DE)**

(54) **Optisches Koppelelement mit einer konvexen Mikrolinse.**

(57) Ein optisches Koppelelement mit einer konvexen brechenden Mikrolinse soll einen hohen Koppelwirkungsgrad aufweisen und einfach herzustellen sein.

Dazu weist das Koppelelement ein flaches Trägerplättchen (2) aus Silizium mit einem pyramidenstumpfförmigen Loch (20) auf, in dem die Mikrolinse (1) in Form einer aus Silizium bestehenden, einseitig abgeplatteten Kugel (10) mit einer zu einer Flachseite (21) des Trägerplättchens (2) im wesentlichen parallelen Fläche (101) angeordnet und befestigt ist, wobei das Trägerplättchen (2) mit einer Flachseite (21) an einem ein optisches Bauteil tragenden Körper befestigbar ist. Ein vorteilhaftes Verfahren zur Herstellung dieses Koppelements ist angegeben.

FIG 1

EP 0 421 118 A1

Die Erfindung betrifft ein optischesKoppelelement mit einer Mikrolinse nach dem Oberbegriff des Patentanspruchs 1.

Ein Koppelelement der genannten Art ist aus der EP 0 280 305 Al (= GR 85 P 1099 E) bekannt. Die Mikrolinse besteht bei diesem bekannten Element aus einer Saphirkugel, die mittels Glaslot in dem pyramidenstumpfförmigen Loch befestigt ist. Zur Befestigung des Trägerplättchens an dem Körper weist dieses eine Metallisierung zum Verlöten auf.

Für Koppeloptiken, die sehr verlustarm sein sollen, sind Kugellinsen wegen ihrer recht hohen spärischen Abberation nicht so gut geeignet.

In der europäischen Patentanmeldung Nr. 88 118 337.0 (GR 87 P 1819 E) ist vorgeschlagen, zur Erzielung eines hohen Koppelwirkungsgrades eine Plankonvexlinse in Form einer einseitig abgeplatteten Kugel aus Silizium oder Germanium zu verwenden.

Aufgabe der Erfindung ist es, ein einfach herzustellendes optisches Koppelelement mit einer Mikrolinse anzugeben, das einen hohen Koppelwirkungsgrad aufweist.

Diese Aufgabe wird durch ein Koppelelement der eingangs genannten Art gelöst, welches die im kennzeichnenden Teil des Patentanspruchs 1 angegebenen Merkmale aufweist.

Ein vorteilhaftes Verfahren zur Herstellung eines optischen Koppelelementes mit Mikrolinse, insbesondere eines Elements nach Anspruch 1, geht aus Anspruch 2 hervor.

Bevorzugte und vorteilhafte Ausgestaltungen dieses Verfahrens gehen aus den Unteransprüchen 3 bis 6 hervor.

Nach dem erfindungsgemäßen Verfahren ist die endgültige Formgebung der plankonvexlinse vorteilhafterweise in den Herstellungsablauf des Koppelelements mit einbezogen.

Die Erfindung wird in der nachfolgenden Beschreibung anhand der Figuren beispielhaft näher elräutert. Es zeigen:

Figur 1 ein Ausführungsbeispiels eines erfindungsgemäßen Koppelelements in perspektivischer Darstellung,

Figur 2 einen Gesamtaufbau einer möglichen Laser-Linse-Einheit in perspektivischer Darstellung, wobei das verwendete Koppelelement nach Figur 1 noch nicht befestigt ist,

Figur 3 eine Draufsicht auf ein größeres Trägerplättchen in Form einer Scheibe aus Silizium, in die mehrere pyramidenstumpfförmige Löcher eingebracht sind,

Figur 4 einen Ausschnitt aus der Scheibe nach Figur 3 in vergrößerter Darstellung, und

Figuren 5 bis 7 jeweils einen Schnitt durch den Ausschnitt nach Figur 3 längs der Schnittlinie V - V, wobei verschiedene Verfahrensstufen dargestellt sind.

Das Koppelelement besteht aus dem Trägerplättchen 2 aus Silizium mit den Flachseiten 21 und 22 und dem über die ganze Dicke d dieses Plättchens 2 sich erstreckenden pyramidenstumpfförmigen Loch 20, sowie aus der in dem Loch 20 befestigten Mikrolinse 1 in Form einer abgeplatteten Kugel 10 mit der im wesentlichen parallel zu den Flachseiten 21 und 22 des Trägerplättchens 2 sich erstreckenden planen Fläche 101.

Auf einer Flachseite des Trägerplättchens 2, vorzugsweise der Flachseite 21, bei der sich die plane Fläche 101 befindet, ist eine Metallisierung 23, 24 zum Verlöten aufgebracht.

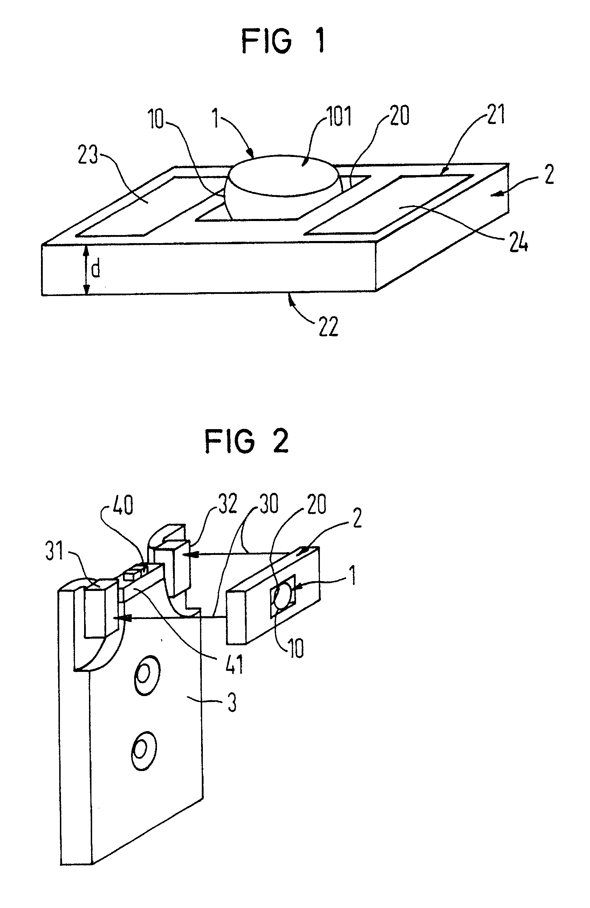

Zur Herstellung einer Laser-Linse-Einheit wird das Koppelelement nach Figur 1 mit der metallisierten Flachseite 21 geeignet justiert an einen Körper gelötet, der einen Halbleiterlaser trägt. Die Figur 2 zeigt ein Beispiel für einen solchen Körper, der mit 3 bezeichnet ist und beispielsweise aus Metall besteht. Dieser Körper trägt eine Laserdiode 40, die z.B. durch einen Keramikisolator 41 vom Körper 3 isoliert ist. Zu beiden Seiten der Laserdiode 40 sind metallisierte Glasklötzchen 31 und 32 an dem Körper 3 befestigt, an die das Koppelelement nach Figur 1 mit in Richtung der Pfeile 30 mit der metallisierten Flachseite 21 voraus herangebracht wird. Seine Befestigung an den Glasklötzchen 31 und 32 erfolgt nach Justierung der Linse 1 durch das Verlöten.

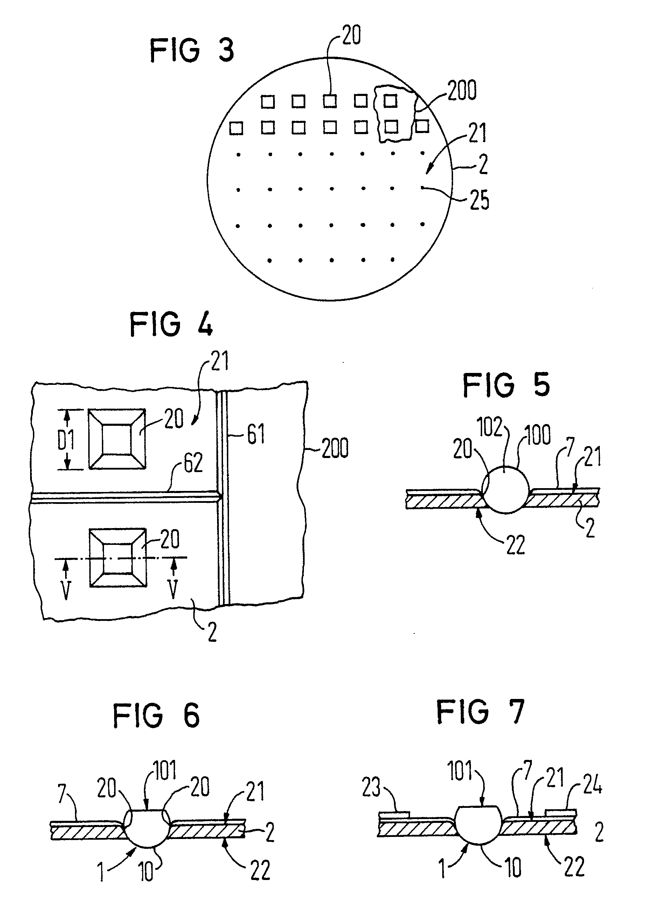

Die Herstellung von Koppelelementen nach Figur 1 kann so erfolgen, daß in ein größeres Trägerplättchen 2 in Form einer Scheibe aus Silizium durch konventionelle Photolithographie und anisotropes Ätzen durchgehende pyramidenstumpfförmige Löcher 20 geätzt werden, wie es in Figur 3 beispielhaft dargestellt ist. Die dort eingezeichneten Punkte 25 sind die Zentren weiterer Löcher 20, die nicht dargestellt sind. Der Bereich 200 in Figur 3 ist in der Figur 4 vergrößert dargestellt. Eventuell können zwischen den Löchern 20 Trenngräben geätzt werden, die am Schluß der einfacheren Trennung der einzelnen Elemente dienen. In der Figur 4 sind solche Gräben beispielhaft dargestellt und mit 61 und 62 bezeichnet.

Nach der Erzeugung der Löcher 20 wird das Trägerplättchen 2 auf einer Flachseite, vorzugsweise auf der Flachseite 21, auf welcher die pyramidenstumpfförmigen Löcher 20 den größeren Durchmesser D1 haben, großflächig mit einem Glaslot 7 (Figuren 5 bis 7) beglast.

In die Löcher 20 des beglasten Trägerplättchens 2 werden in die Löcher 20 polierte Siliziumkugeln 100, die so bemessen sind, daß eine Kugelkappe 102 aus der beglasten Flachseite 21 herausragt, eingesetzt und eingeglast (Figur 5).

Die herausragenden Kugelkappen 102 werden abgeschliffen und poliert, wonach einseitig abgeplattete Kugeln 10 mit zu der Flachseite 21 des Trägerplättchens 2 parallelen planen Flächen 101 entstehen (Figur 6). Ein besonderer Vorteil des Verfahrens besteht darin, daß sämtliche Kugeln 100 eines größeren Trägerplättchens 2 gleichzeitig in einem Arbeitsgang bearbeitet werden können.

Auf die beglaste Flachseite 21 wird zwischen den abgeplatteten Kugeln 10 eine Metallisierung 23, 24 aufgebracht, die als Lötfläche dient. Die Metallisierung 23, 24 kann in konventioneller Siliziumtechnologie erzeugt werden.

Danach können Koppelelemente nach Figur 1 mit nur einer Mikrolinse 1 durch eine Durchtrennung des größeren Trägerplättchens 2 zwischen den abgeplatteten Kugeln 10, beispielsweise durch Sägen oder Brechen, erzeugt werden.

Vorzugsweise wird eine abgeplattete Kugel 10 durch Aufbringen einer oder mehrerer Schichten bestimmter Brechzahl entspiegelt. Dies wird zweckmäßigerweise vor dem Aufbringen der Metallisierung durchgeführt, wobei Standardverfahren verwendet werden können.

Bei einem Ausführungsbeispiel wurde als Trägerplättchen 2 eine Siliziumscheibe mit einer Dicke d von 0,381 mm verwendet, die anisotrop geätzt und großflächig mit dem Glaslot IP745 der Firma Innotech beglast wurde.

In diese Scheibe wurden Siliziumkugeln eingeglast, indem die Scheibe in einem Ofen etwa 20 Minuten auf einer Temperatur von 700° C gehalten wurde. Dieser Verfahrensschritt ist vorteilhafterweise unkritisch. Die eingeglasten Kugeln wurden von Hand auf Dicke geschliffen und poliert. Die geschliffenen und polierten abgeplatteten Kugeln wurden anschließend durch Aufdampfen dünner Schichten aus $Sc_2O_3$ beidseitig entspiegelt. Anstelle von $Sc_2O_3$ kann auch $SiO$ oder $Si_3N_4$ verwendet werden. Die Beschichtung kann je nach Material durch Aufdampfen oder Sputtern oder mit einem CVD-Verfahren erfolgen. An die Beschichtung müssen vorteilhafterweise keine hohen Genauigkeitsanforderungen gestellt werden. Unter diesen Umständen kann für eine Betriebswellenlänge von 1,3 μm auf jeder Seite der Linse ein Reflexionsgrad erreicht werden, der unter 1 %, mitunter sogar unter 0,5 % bleibt.

## Ansprüche

1. Optisches Koppelelement mit einer konvexen brechenden Mikrolinse (1) und einem ein pyramidenstumpfförmiges durchgehendes Loch (20) aufweisenden flachen Trägerplättchen (2) aus Silizium, wobei die Mikrolinse (1) in dem Loch (20) angeordnet und befestigt ist, wobei das Trägerplättchen (2) mit einer Flachseite (21) derart an einem ein lichtemittierendes oder /und lichtempfangendes optisches Bauteil (40) tragenden Körper (3) befestigt ist, daß das emittierte oder zu empfangende Licht die Mikrolinse (1) durchdringt, **dadurch gekennzeichnet** , daß die Mikrolinse (1) aus einer Plankonvexlinse in Form einer aus Silizium bestehenden, einseitig abgeplatteten Kugel (10) mit einer zu einer Flachseite (21) des Trägerplättchens (2) im wesentlichen parallelen planen Fläche (101) besteht, die das emittierte oder zu empfangende Licht durchdringt.

2. Verfahren zur Herstellung eines optischen Koppelelementes mit einer Mikrolinse, insbesondere eines Elements nach Anspruch 1 oder 2, **dadurch gekennzeichnet,** daß in ein Trägerplättchen (2) ein kegelstumpfförmiges, durchgehendes Loch (20) eingebracht wird, daß in dem Loch (20) eine Kugel (100) aus transparentem Material mittels eines Befestigungsmittels (7) derart befestigt wird, daß zumindest aus einer Flachseite (21) des Trägerplättchens (2) eine Kugelkappe (102) hervorsteht, und daß durch Bearbeitung dieser Kugelkappe (102) die abgeplattete Kugel (10) mit der planen Fläche (101) erzeugt wird.

3. Verfahren nach Anspruch 2, **dadurch gekennzeichnet** , daß das kegelstumpfförmige durchgehende Loch (20) durch anisotropes Ätzen in das Trägerplättchen (2) aus anisotrop ätzbarem Material geätzt wird.

4. Verfahren nach Anspruch 2 oder 3, **dadurch gekennzeichnet** , daß das Befestigungsmittel (7) aus einem Glaslot besteht.

5. Verfahren nach einem der Ansprüche 2 bis 4, **dadurch gekennzeichnet** , daß die plane Fläche (101) durch Schleifen der Kugelkappe (102) erzeugt wird.

6. Verfahren nach einem der Ansprüche 2 bis 5 zur Herstellung mehrerer optischer Koppelelemente mit Mikrolinse, **dadurch gekennzeichnet** , daß in ein größeres Trägerplättchen (2) mehrere pyramidenförmige, durchgehende Löcher (20) eingebracht werden, daß in jedem Loch (20) eine Kugel (100) aus transparentem Material derart befestigt wird, daß aus einer Flachseite (21) des Trägerplättchens (2) eine Kugelkappe (102) jeder Kugel (100) heraussteht, daß durch gemeinsame Bearbeitung sämtlicher dieser Kugelkappen (102) aus jeder Kugel (100) eine abgeplattete Kugel (10) mit planer Fläche (101) erzeugt wird, und daß durch eine Durchtrennung des Trägerplättchens (2) zwischen den Löchern (20) mehrere optische Koppelelemente mit jeweils nur einer Mikrolinse erzeugt werden.

# FIG 1

# FIG 2

# FIG 3

# FIG 4

# FIG 5

# FIG 6

# FIG 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 331 331 (AT&T) <br> * Zusammenfassung; Spalte 8, Zeile 51 - Spalte 9, Zeile 8; Abbildungen 6,9 * | 1 | G 02 B 6/42 <br> G 02 B 7/02 |
| A | | 3 | |
| Y | US-A-4 726 645 (YAMASHITA et al.) <br> * Spalte 7; Zeilen 8-18; Abbildungen 19,20; Ansprüche * | 1 | |
| Y | PATENT ABSTRACTS OF JAPAN Band 8, Nr. 217 (E-270), 4. Oktober 1984; & JP - A - 59101881 (SUMITOMO DENKI) 12.06.1984 | 2 | |
| A | idem | 6 | |
| Y | PATENT ABSTRACTS OF JAPAN Band 10, Nr. 27 (E-378), 4. Februar 1986; & JP - A - 60187077 (MITSUBISHI DENKI) 24.09.1985 | 2 | |
| A | idem | 5 | RECHERCHIERTE SACHGEBIETE (Int. Cl.5) |
| A,D | EP-A-0 280 305 (SIEMENS) <br> * Zusammenfassung; Spalte 3, Zeilen 36-55; Abbildungen 1-3; Ansprüche 1-3,8 * | 1-4,6 | G 02 B |
| A | EP-A-0 164 834 (PLESSEY OVERSEAS) <br> * Zusammenfassung; Abbildungen 4,7; Anspruch 1 * | 2,6 | |

Der vorliegende Recherchenbericht wurde für alle Patentansprüche erstellt

| Recherchenort | Abschlußdatum der Recherche | Prüfer |
|---|---|---|
| BERLIN | 17-01-1991 | HYLLA W R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)